(19) **Europäisches Patentamt**

**European Patent Office**

**Office européen des brevets**

(11) Veröffentlichungsnummer: **0 337 180 B1**

(12) # EUROPÄISCHE PATENTSCHRIFT

(45) Veröffentlichungstag der Patentschrift: **09.12.92**

(21) Anmeldenummer: **89105366.2**

(22) Anmeldetag: **25.03.89**

(51) Int. Cl.⁵: **F16K 11/10**, F16K 1/30

(54) **Entnahmeventilkopf für Behälter.**

(30) Priorität: **31.03.88 DE 3811041**

(43) Veröffentlichungstag der Anmeldung:
**18.10.89 Patentblatt 89/42**

(45) Bekanntmachung des Hinweises auf die
Patenterteilung:
**09.12.92 Patentblatt 92/50**

(84) Benannte Vertragsstaaten:
**BE CH DE ES FR GB IT LI NL SE**

(56) Entgegenhaltungen:
**EP-A- 0 288 931**
**DE-A- 2 206 561**
**US-A- 4 723 967**

(73) Patentinhaber: **MERCK PATENT GESELL-
SCHAFT MIT BESCHRÄNKTER HAFTUNG
Frankfurter Strasse 250 Postfach 4119
W-6100 Darmstadt(DE)**

(72) Erfinder: **Joseph, Frank
Breslauer Strasse 117
W-6084 Gernsheim(DE)**
Erfinder: **Jürgensen, Holger, Dr.
Melatenerstrasse 56
W-5100 Aachen(DE)**

EP 0 337 180 B1

**Beschreibung**

Die Erfindung betrifft einen Entnahmeventilkopf für einen Behälter für hochreine und/oder toxische flüssige Chemikalien gemäß dem Oberbegriff von Anspruch 1.

Für den Transport und die Anwendung von hochreinen und/oder toxischen Prozeßchemikalien werden Behälter aus Stahl, Glas, Kunststoff oder ähnlichen Werkstoffen eingesetzt. Diese Behälter sind mit Absperrventilen versehen, die ein Befüllen und Entnehmen der Chemikalien ermöglichen. Diese Ventile können zu einem Entnahmeventilkopf zusammengefaßt sein, der auf den Behälter aufgesetzt wird.

Üblicherweise wird dem Behälter über die Gaseinlaßleitung ein Füllgas zugeführt, das zum Austrag der flüssigen Chemikalien aus dem Behälter dient. Das Füllgas wird entweder an der Oberseite des Behälters zugeführt und drückt die flüssige Chemikalie durch ein Steigrohr durch den Behälterauslaß in die Entnahmeleitung, oder es wird über das in die Flüssigkeit ragende Steigrohr zugeführt und nimmt heim Hochperlen Anteile der Flüssigkeit mit.

Es ist bekannt, die angeschlossenen Leitungen mit einem Spülgas, beispielsweise dem auch für die Entnahme verwendeten Füllgas zu spülen. Hierfür wird nach dem Schließen des Einlaßventils und des Auslaßventils ein durch ein Spülventil absperrbarer Bypass geöffnet, so daß das Gas aus der Gaseinlaßleitung in die Entnahmeleitung strömen kann. Hierbei verbleiben jedoch im Bereich des Einlaßventils und des Auslaßventils ungespülte Toträume.

Aus der US-A-4,723,967 ist ein Entnahmeventilkopf gemäß Oberbegriff von Anspruch 1 bekannt, der drei Ventilsitze für Einlaß-, Auslaß- und Spülventil enthält, die, ebenso wie die dazugehörigen Leitungen, in enger räumlicher Nachbarschaft angeordnet sind, um beim Spülen Toträume zu vermeiden.

Auf der Oberfläche des Entnahmeventilkopfes sind parallel nebeneinander zwei Ventilsitze, die den Ein- bzw. Auslaßstrom regeln angeordnet, der dritte Ventilsitz, der das Spülventil enthält, ist auf der Vorderseite dazu angebracht.

Als Ventile können Dreiwegehähne verwendet werden, bei denen aber in den Bohrungen des Hahnkükens nicht spülbare Kanäle verbleiben. Außerdem ist bei diesen Hähnen keine ausreichende, rein metallische Abdichtung möglich, wie dies bei vielen derartigen Chemikalien erforderlich ist. Deshalb werden hierfür Membranventile verwendet, bei denen eine Metallmembran eine vollständige metallische Abdichtung der beweglichen Ventilteile gegenüber dem Ventilgehäuse gewährleistet. Diese Membranventile sind aber jeweils nur Absperrventile. Beim Spülvorgang verbleiben in den zu den Absperrventilen führenden Leitungszweigen ungespülte Toträume, die nur durch gesonderte Spülanschlüsse gespült werden können.

Aufgabe der Erfindung ist es daher, einen Entnahmeventilkopf der eingangs genannten Gattung so weiterzubilden, daß durch eine optimale Anordnung der Ventilsitze, Ventile und Zu- und Ableitungen eine vollständige and totraumfreie Spülung möglich ist.

Diese Aufgabe wird durch die Merkmale im kennzeichnenden Teil von Anspruch 1 gelöst. Gegenstand der Erfindung ist daher ein Entnahmeventilkopf (1) für einen Behälter (3) für hochreine und/oder toxische flüssige Chemikalien, mit einem Einlaßventil (10) für ein Füllgas, das eine Gaseinlaßleitung (4) und einen Behältereinlaß (5) verbindet, einem Auslaßventil (11), das einen Behälterauslaß (7) mit einer Entnahmeleitung (8) verbindet, einem Spülventil (12), wobei ein durch dieses Spülventil (12) absperrbarer Bypass die Gaseinlaßleitung (4) mit der Entnahmeleitung (8) verbindet, das Einlaßventil (10), das Auslaßventil (11) und das Spülventil (12) in einem gemeinsamen metallischen Ventilgehäuseblock (9) eingesetzt sind, ein Ventilsitz (10a) für das Einlaßventil (10) zwischen der Gaseinlaßleitung (4) und dem Behältereinlaß (5) angeordnet ist, ein Ventilsitz (11a) für das Auslaßventil (11) zwischen dem Behälterauslaß (7) und der Entnahmeleitung (8) angeordnet ist, ein Ventilsitz (12a) für das Spülventil (12) zwischen der Gaseinlaßleitung (4) und der Entnahmeleitung (8) angeordnet ist, diese Ventilsitze (10a, 11a, 12a) jeweils mit einem Ventilschließkörper (10b, 11b, 12b) zusammenwirken und alle Ventilsitze (10a, 11a, 12a) im Ventilgehäuseblock (9) in enger räumlicher Nähe zueinander angeordnet sind, dadurch gekennzeichnet, daß das Einlaßventil (10), das Auslaßventil (11) und das Spülventil (12) als Metallmembranventile ausgeführt sind, daß das Spülventil (12) und das Auslaßventil (11) miteinander fluchtend angeordnet und ihre Ventilsitze (12a bzw. 11a) durch eine kurze Bohrung (14) miteinander verbunden sind, aus der die Entnahmeleitung (8) abgezweigt ist, daß eine vom Ventilsitz (10a) des Einlaßventils (10) ausgehende kurze Bohrung (13) in die die Gaseinlaßleitung (4) mündet, rechtwinklig zur Achse des Spülventils (12) und des Auslaßventils (11) verläuft und an das Spülventil (12) angeschlossen ist, und daß im Einlaßventil (10), Spülventil (12) und Auslaßventil (11) jeweils ein längsbeweglicher, mit der Metallmembran (18) gasdicht verbundener Ventilkörper (17) über eine zusätzliche Elastomerdichtung (20) gegenüber einem Ventilgehäuse (19) abgedichtet ist.

Durch die enge räumliche Nähe der als Absperrventile wirkenden drei Metallmembranventile haben diese die Funktion von zwei Dreiwegeventilen. Da die Ventilsitze und die Mündungen aller angeschlossenen Leitungen räumlich dicht beeinanderliegen, verbleiben beim Spülvorgang keine Toträume, wenn das Einlaßventil und das Auslaßventil geschlossen und das Spülventil geöffnet ist.

Durch die Verwendung von Membranventilen wird erreicht, daß auf der den Chemikalien zugewandten Membranseite keine beweglichen und daher abrieberzeugenden Teile vorhanden sind.

Erfindungsgemäß ist vorgesehen, daß das Spülventil und das Auslaßventil miteinander fluchtend angeordnet und ihre Ventilsitze durch eine kurze Bohrung miteinander verbunden sind, aus der die Entnahmeleitung abgezweigt ist. Ferner ist eine vom Ventilsitz des Einlaßventils ausgehende kurze Leitung, die in die Gaseinlaßleitung mündet, rechtwinklig zur Achse des Spülventils und des Auslaßventils ausgerichtet und an das Spülventil angeschlossen. Dadurch wird erreicht, daß alle Ventilsitze und die ihnen zugeordneten Leitungsmündungen möglichst dicht beieinander angeordnet sind, so daß heim Spülvorgang keine Toträume entstehen.

Desweiteren ist vorgesehen, daß im Einlaßventil, Spülventil und Auslaßventil jeweils ein längsbeweglicher, mit der Metallmembran gasdicht verbundener Ventilkörper über eine zusätzliche Elastomerdichtung gegenüber einem Ventilgehäuse abgedichtet ist. Dadurch wird eine zusätzliche Absicherung gegen ein Undichtwerden erreicht. Besonders zweckmäßig ist es, wenn ein zwischen der Metallmembran und der Elastomerdichtung liegender Raum über eine Bohrung im Ventilkörper mit einer mit einem lösbaren Stopfen verschlossenen Leckprüföffnung verbunden ist. Damit wird es ermöglicht, jederzeit die Dichtheit der Metallmembran zu prüfen, ohne daß das Ventil geöffnet werden müßte oder das für die Dichtheitsprüfung verwendete Medium in die Produktleitungen des Entnahmeventilkopfs gelangt.

Weitere vorteilhafte Ausgestaltungen des Erfindungsgedankens sind Gegenstand der abhängigen Ansprüche.

In der Zeichnung wird ein Ausführungsbeispiel dargestellt und nachfolgend beschrieben. Es zeigt:

Fig. 1 in einer Seitenansicht und einem Teilschnitt einen Entnahmeventilkopf, der auf einen Behälter für hochreine und/oder toxische flüssige Chemikalien aufgesetzt ist,

Fig. 2 ein vereinfachtes Schaltschema des Entnahmeventilkopfs gemäß Fig. 1,

Fig. 3 einen vergrößerten Schnitt längs der Linie III-III in Fig. 1 und

Fig. 4 eine Ansicht des Ventilgehäuseblocks in Richtung des Pfeiles IV in Fig. 3, wobei die Ventileinsätze weggelassen sind, teilweise im Schnitt.

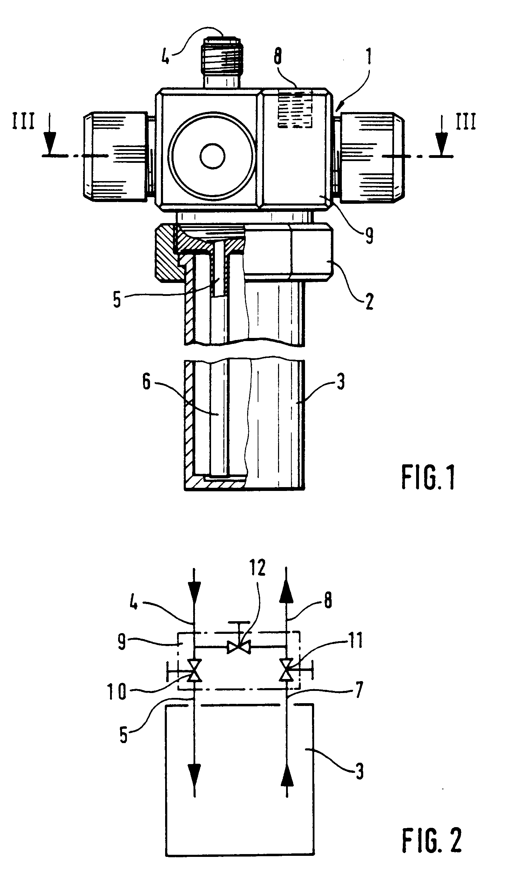

Der in Fig. 1 gezeigte Entnahmeventilkopf 1 ist mittels einer Überwurfmutter 2 als Anschlußverschraubung an einen Behälter 3 angeschlossen, aus dem hochreine und/oder toxische flüssige Chemikalien entnommen werden sollen.

Über eine Gaseinlaßleitung 4 kann ein Füllgas zugeführt werden, das über einen Behältereinlaß 5 und ein Tauchrohr 6, das spaltfrei in Orbitalschweißtechnik angeschweißt ist, in den Behälter 3 gelangt. Aus einem Behälterauslaß 7 gelangt das mit Teilen der flüssigen Chemikalie beladene Füllgas zu einer Entnahmeleitung 8, durch die es zur weiteren Verarbeitung transportiert wird.

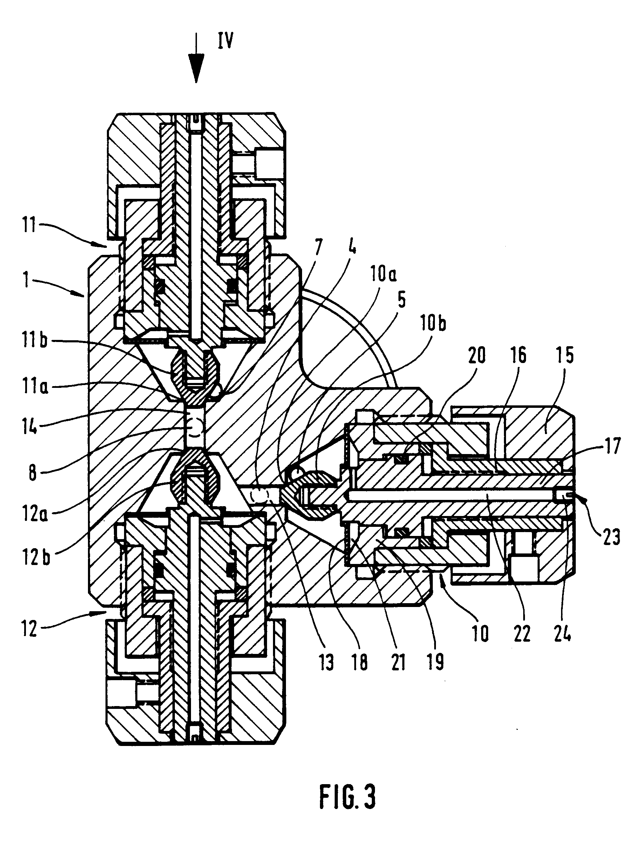

Wie in Fig. 2 in schematischer Darstellung und in Fig. 3 in einem Horizontalschnitt gezeigt, sind in einem Ventilgehäuseblock 9, der einschließlich aller Leitungsanschlüsse einstückig aus einem Metallblock besteht und vollständig elektrochemisch poliert ist, ein Einlaßventil 10, ein Auslaßventil 11 und ein Spülventil 12 angeordnet. Jedes dieser Ventile 10, 11 und 12 ist ein als Metallmembranventil ausgeführtes Absperrventil und wird später noch in Einzelheiten erläutert. Jedem Ventil 10, 11 und 12 ist ein Ventilsitz 10a, 11a und 12a im Ventilgehäuseblock zugeordnet. Jedes Ventil schließt den zugeordneten Ventilsitz 10a, 11a und 12a durch einen beweglichen Ventilschließkörper 10b, 11b bzw. 12b.

Während des Entnahmevorgangs ist das Spülventil 12 geschlossen und das Einlaßventil 10 und das Auslaßventil 11 sind geöffnet. Für den Spülvorgang werden das Einlaßventil 10 und das Auslaßventil 11 geschlossen und das Spülventil 12 wird geöffnet.

Wie Fig. 3 zeigt, sind alle Ventilsitze 10a, 11a und 12a sowie alle Leitungsmündungen in so enger räumlicher Nähe zueinander angeordnet, daß beim Spülvorgang keine Toträume verbleiben.

Der Ventilsitz 10a des Einlaßventils 10 liegt zwischen dem Behältereinlaß 5 und der Gaseinlaßleitung 4, die in eine kurze Bohrung 13 unmittelbar vor dem Ventilsitz 10a mündet. Diese kurze Bohrung 13 ist an das Spülventil 12 angeschlossen, so daß der Ventilsitz 12a zwischen dieser kurzen Bohrung 13 und einer rechtwinklig dazu verlaufenden weiteren kurzen Bohrung 14 liegt, in die die Entnahmeleitung 8 mündet. Der Ventilsitz 11a des Auslaßventils 11 liegt zwischen der Mündung der Entnahmeleitung 8 und des Behälterauslasses 7.

Die Achsen des Auslaßventils 11 und des Spülventils 12 fluchten miteinander; rechtwinklig hierzu verläuft die Achse des Einlaßventils 10.

Wenn beim Entnahmevorgang das Spülventil 12 geschlossen ist, strömt das Füllgas aus der Gaseinlaßleitung 4 in den Behältereinlaß 5, durch den Behälter 3 und tritt durch den Behälterauslaß 7 wieder in den Entnahmeventilkopf 1 ein, den es durch die Entnahmeleitung 8 verläßt. Wenn für den Spülvorgang das Einlaßventil 10 und das Auslaßventil 11 geschlossen sind, ist der Behälter 3 von dem Leitungssystem 4, 8 abgetrennt. Durch Öffnen des Spülventils 12 wird ein Bypass hergestellt, der den Spülvorgang ermöglicht. Das für das Spülen verwendete Gas strömt dann durch die Gaseinlaßleitung 4 über den geöffneten Ventilsitz 12a in die Entnahmeleitung 8. Da die Mündungen dieser beiden Leitungen 4 und 8 dicht vor den benachbarten, geschlossenen Ventilsitzen 10a und 11a liegen, verbleiben keine ungespülten Toträume.

Die Ventileinsätze des Einlaßventils 10, des Auslaßventils 11 und des Spülventils 12 sind gleich aufgebaut und weisen jeweils einen mittels eines Handrades 15 über ein Gewinde 16 längsbeweglichen Ventilkörper 17 auf, der an seinem vorderen Ende mit einer Metallmembran 18 gasdicht verschweißt ist. Der Ventilkörper 17 trägt an seinem vorderen Ende den Ventilschließkörper 10b, 11b bzw. 12b.

Der Ventilkörper 17 ist in einem Ventilgehäuse 19 längsbeweglich geführt und über eine Elastomerdichtung 20 zusätzlich abgedichtet. Ein zwischen der Metallmembran 18 und der Elastomerdichtung 20 liegender Raum 21 steht über eine Bohrung 22 im Ventilkörper 17 mit einer Leckprüföffnung 23 in Verbindung, die im normalen Betrieb mit einem lösbaren Stopfen 24 verschlossen sein kann. Durch diese Rohrung 22 kann jederzeit eine Leckprüfung der Metallmembran 18 durchgeführt werden. Hierzu wird beispielsweise ein Druckgas dem Raum 21 zugeführt. Wenn der aufgebrachte Druck erhalten bleibt, ist die Metallmembran 18 dicht, und es kann kein für die Leckprüfung verwendetes Gas in die Produkträume des Entnahmeventilkopfs 1 gelangen.

Da das Auslaßventil 11 und das Spülventil 12 gleich aufgebaut sind wie das Einlaßventil 10, wurde hier nur das Einlaßventil 10 in Einzelheiten beschrieben.

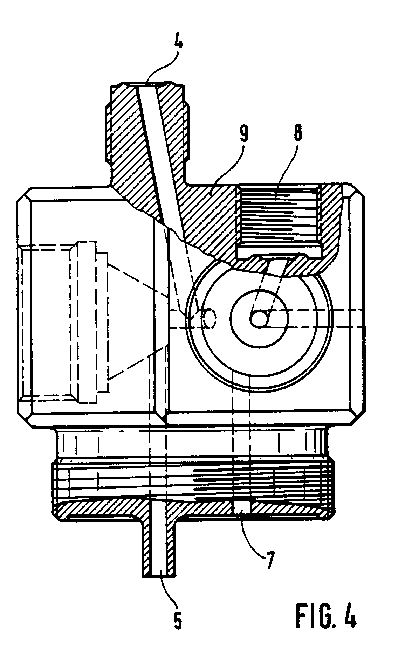

Fig. 4 zeigt den Ventilgehäuseblock 9, der einstückig aus einem Metallblock gefertigt ist. Man erkennt insbesondere den Bohrungsverlauf der Gaseinlaßleitung 4, der Entnahmeleitung 8 und des Behältereinlasses 5 sowie des Behälterauslasses 7. Um Anschlußverwechselungen mit Sicherheit auszuschließen, ist der Schraubanschluß für die Gaseinlaßleitung 4 mit Außengewinde und der Schraubanschluß für die Entnahmeleitung 8 mit Innengewinde ausgeführt.

## Patentansprüche

1.  Entnahmeventilkopf (1) für einen Behälter (3) für hochreine und/oder toxische flüssige Chemikalien, mit einem Einlaßventil (10) für ein Füllgas, das eine Gaseinlaßleitung (4) und einen Behältereinlaß (5) verbindet, einem Auslaßventil (11), das einen Behälterauslaß (7) mit einer Entnahmeleitung (8) verbindet, einem Spülventil (12), wobei ein durch dieses Spülventil (12) absperrbarer Bypass die Gaseinlaßleitung (4) mit der Entnahmeleitung (8) verbindet, das Einlaßventil (10), das Auslaßventil (11) und das Spülventil (12) in einem gemeinsamen metallischen Ventilgehäuseblock (9) eingesetzt sind, ein Ventilsitz (10a) für das Einlaßventil (10) zwischen der Gaseinlaßleitung (4) und dem Behältereinlaß (5) angeordnet ist, ein Ventilsitz (11a) für das Auslaßventil (11) zwischen dem Behälterauslaß (7) und der Entnahmeleitung (8) angeordnet ist, ein Ventilsitz (12a) für das Spülventil (12) zwischen der Gaseinlaßleitung (4) und der Entnahmeleitung (8) angeordnet ist, diese Ventilsitze (10a, 11a, 12a) jeweils mit einem Ventilschließkörper (10b, 11b, 12b) zusammenwirken und alle Ventilsitze (10a, 11a, 12a) im Ventilgehäuseblock (9) in enger räumlicher Nähe zueinander angeordnet sind, dadurch gekennzeichnet, daß das Einlaßventil (10), das Auslaßventil (11) und das Spülventil (12) als Metallmembranventile ausgeführt sind, daß das Spülventil (12) und das Auslaßventil (11) miteinander fluchtend angeordnet und ihre Ventilsitze (12a bzw. 11a) durch eine kurze Bohrung (14) miteinander verbunden sind, aus der die Entnahmeleitung (8) abgezweigt ist, daß eine vom Ventilsitz (10a) des Einlaßventils (10) ausgehende kurze Bohrung (13) in die die Gaseinlaßleitung (4) mündet, rechtwinklig zur Achse des Spülventils (12) und des Auslaßventils (11) verläuft und an das Spülventil (12) angeschlossen ist, und daß im Einlaßventil (10), Spülventil (12) und Auslaßventil (11) jeweils ein längsbeweglicher, mit der Metallmembran (18) gasdicht verbundener Ventilkörper (17) über eine zusätzliche Elastomerdichtung (20) gegenüber einem Ventilgehäuse (19) abgedichtet ist.

2.  Entnahmeventilkopf nach Anspruch 1, dadurch gekennzeichnet, daß ein zwischen der Metallmembran (18) und der Elastomerdichtung (20) liegender Raum (21) über eine Bohrung (22) im Ventilkörper (17) mit einer mit einem lösbaren Stopfen (24) verschlossenen Leckprüföffnung (23) verbunden ist.

3.  Entnahmeventilkopf nach Anspruch 1, dadurch gekennzeichnet, daß der Ventilgehäuseblock (9) einschließlich aller Leitungsanschlüsse einstückig aus einem Metallblock besteht und vollständig elektrochemisch poliert ist.

4.  Entnahmeventilkopf nach Anspruch 1, dadurch gekennzeichnet, daß der Ventilgehäuseblock (9) eine Anschlußverschraubung (2) zum unmittelbaren Anschluß an den Behälter (3) aufweist und dadurch ein Aufschrauben und Abtrennen des Ventilgehäuseblocks (9) ermöglicht wird.

## Claims

1. Extraction valve head (1) for a tank (3) for high-purity and/or toxic liquid chemicals, having an inlet valve (10) for a filler gas, which joins a gas inlet line (4) and a tank inlet (5), an outlet valve (11), which joins a tank outlet (7) to an extraction line (8), and a purging valve (12), in which arrangement a bypass, which can be shut off by this purging valve (12), joins the gas inlet line (4) to the extraction line (8), the inlet valve (10), the outlet valve (11) and the purging valve (12) are fitted in a common metallic valve housing block (9), a valve seat (10a) for the inlet valve (10) is arranged between the gas inlet line (4) and the tank inlet (5), a valve seat (11a) for the outlet valve (11) is arranged between the tank outlet (7) and the extraction line (8), a valve seat (12a) for the purging valve (12) is arranged between the gas inlet line (4) and the extraction line (8), these valve seats (10a, 11a, 12a) in each case interact with a valve closing body (10b, 11b, 12b) and all the valve seats (10a, 11a, 12a) are arranged in close spatial proximity to one another in the valve housing block (9), characterised in that the inlet valve (10), the outlet valve (11) and the purging valve (12) are made as metal diaphragm valves, in that the purging valve (12) and the outlet valve (11) are arranged in alignment with each other and their valve seats (12a and 11a, respectively) are interconnected by a short bore (14), from which the extraction line (8) branches off, in that a short bore (13), which leaves the valve seat (10a) of the inlet valve (10) and into which the gas inlet line (4) opens out, runs at right angles to the axis of the purging valve (12) and of the outlet valve (11) and is connected to the purging valve (12), and in that, in the inlet valve (10), purging valve (12) and outlet valve (11), in each case a longitudinally movable valve body (17), connected gas-tightly to the metal diaphragm (18), is sealed off with respect to a valve housing (19) by means of an additional elastomer seal (20).

2. Extraction valve head according to Claim 1, characterised in that a space (21) lying between the metal diaphragm (18) and the elastomer seal (20) is joined via a bore (22) in the valve body (17) to a leak-checking orifice (23), closed by a releasable stopper (24).

3. Extraction valve head according to Claim 1, characterised in that the valve housing block (9) consists integrally of a metal block, including all line connections, and is completely electrochemically polished.

4. Extraction valve head according to Claim 1, characterised in that the valve housing block (9) has a screwed connection (2) for direct connection to the tank (3) and, as a result, a screwing-on and taking-off of the valve housing block (9) is made possible.

## Revendications

1. Tête de soupape de prélèvement (1) pour un récipient (3) destiné à des produits chimiques liquides de haute pureté et/ou toxiques, comportant une soupape d'admission (10) pour un gaz de remplissage, qui relie une conduite d'admission de gaz (4) et une admission de récipient (5), une soupape d'échappement (11), qui relie un échappement de récipient (7) à une conduite de prélèvement (8), une soupape de rinçage (12), où une dérivation susceptible d'être obturée au moyen ce cette soupape de rinçage (12) reliée la conduite d'admission de gaz (4) à la conduite de prélèvement (8), la soupape d'admission (10), la soupape d'échappement (11) et la soupape de rinçage (12) étant insérés dans un bloc de carter de soupape (9) métallique commun, un siège de soupape (10a) pour la soupape d'admission (10) étant disposé entre la conduite d'admission de gaz (4) et l'admission de récipient (5), un siège de soupape (11a) pour la soupape d'échappement (11) étant disposé entre l'échappement de récipient (7) et la conduite de prélèvement (8), un siège de soupape (12a) pour la soupape de rinçage (12) étant disposé entre la conduite d'admission de gaz (4) et la conduite de prélèvement (8), ces sièges de soupape (10a,11a,12a) coopérant chacun avec un corps d'obturation de soupape (10b,11b,12b) et tous les sièges de soupape (10a,11a,12a) étant disposés dans le bloc de carter de soupape (9) très près les uns des autres spatialement, caractérisé en ce que la soupape d'admission (10), la soupape d'échappement (11) et la soupape de rinçage (12) sont réalisées sous forme de soupapes à membrane métallique, en ce que la soupape de rinçage (12) et la soupape d'échappement (11) sont disposées alignées l'une par rapport à l'autre et leurs sièges de soupapes (12a respectivement 11a) son reliés ensemble au moyen d'un alésage (14) court, à partir duquel est dérivé la conduite de prélèvement (8), en ce qu'un alésage (13) court, partant du siège de soupape (10a) de la soupape d'admission (10) débouche dans la conduite d'admission de gaz (4), s'étend perpendiculairement par rapport à l'axe de la soupape de rinçage (12) et de la soupape d'échappement (11) et est raccordé à la soupape de rinçage (12), et en ce que dans la soupape d'admission (10), la soupape de rinçage (12) et la soupape d'échappement (11), un corps de soupape (17) déplaçable longitudinalement, relié de façon étanche aux gaz à la membrane métallique (18), est chaque fois isolé de façon étanche vis à vis d'un carter de soupape (19) par l'intermédiaire d'un joint d'étanchéité en élastomère (20) supplémentaire.

2. Tête de soupape de prélèvement selon la revendication 1, caractérisé en ce qu'un espace (21) situé entre la membrane métallique (18) et le joint d'étanchéité en élastomère (20) est relié, par l'intermédiaire d'un alésage (22) ménagé dans le corps de soupape (17), à un orifice de contrôle de fuite (23) obturé à l'aide d'un bouche (24) amovible.

3. Tête de soupape de prélèvement selon la revendication 1, caractérisé en ce que le bloc de carter de soupape (9) y compris tous les raccordements de tuyauterie, sont réalisés d'un seul tenant à partir d'un bloc métallique et est entièrement poli par voie électrochimique.

4. Tête de soupape de prélèvement selon la revendication 1, caractérisé en ce que le bloc de carter de soupape (9) présente un vissage de raccordement (2) pour réaliser un raccordement direct au récipient (3) et permet de ce fait un vissage et un démontage du bloc de carter de soupape (9).

FIG.1

FIG. 2

FIG. 3

FIG. 4